# EUROPÄISCHE PATENTANMELDUNG

(11) **EP 2 533 406 A2**
(43) Veröffentlichungstag der Anmeldung: **12.12.2012**
(21) Anmeldenummer: 12167047.5
(22) Anmeldetag: 08.05.2012
(51) Int. Cl.: H02K 15/03

(54) **Verfahren zur Herstellung eines Elektromotors**

(30) Priorität: 07.06.2011 DE 102011077051
(71) Anmelder: Dunkermotoren GmbH, 79848 Bonndorf/Schwarzwald (DE)
(72) Erfinder: Fechtig, Helmut, 79848 Bonndorf-Wellendingen (DE)
(74) Vertreter: Dreiss

(57) **Zusammenfassung**

Es wird ein Verfahren zur Herstellung eines Elektromotors beschrieben, insbesondere zur Herstellung eines permanent erregten Elektromotors. Ein Segment-Magnet wird einem Greifer zugeführt und von dem Greifer gehalten. Der von dem Greifer gehaltene Segment-Magnet wird einer Magnetisierungsvorrichtung zugeführt und dort magnetisiert. Der von dem Greifer gehaltene Segment-Magnet wird einer Klebstoffzuführvorrichtung zugeführt und dort mit Klebstoff versehen. Der von dem Greifer gehaltene Segment-Magnet wird einem Rotorpaket zugeführt und auf einen vorgebbaren Ort des Rotorpakets aufgeklebt.

## Beschreibung

Die Erfindung betrifft ein Verfahren zur Herstellung eines Elektromotors sowie eine zugehörige Montagevorrichtung.

Beispielsweise bei einem bürstenlosen, permanentmagnetisch erregten Elektromotor ist der Rotor üblicherweise aus einer Vielzahl von Blechen aufgebaut. Die dem Stator zugewandte Außenfläche des Rotors weist mehrere permanent erregte Magnete auf, deren Anzahl der Polzahl des Elektromotors entspricht. Die aufeinanderfolgenden Magnete sind dabei gegensinnig magnetisiert.

Zur Herstellung des Rotors ist es bekannt, die einzelnen Magnete auf die Bleche des Rotors aufzukleben. Diese Vorgehensweise weist keine reproduzierbare Genauigkeit bei der Montage der Magnete auf und ist im Hinblick auf die aufeinanderfolgende Polarität der Magnete fehleranfällig.

Der Erfindung liegt die Aufgabe zugrunde, ein verbessertes Verfahren zur Herstellung eines Elektromotors zu schaffen.

Die Erfindung löst diese Aufgabe durch ein Verfahren nach dem Anspruch 1. Die Aufgabe wird ebenfalls durch eine Montagevorrichtung nach dem Anspruch 10 gelöst.

Bei der Erfindung wird ein Segment-Magnet an einem Rotorpaket festgeklebt. Hierzu wird der Segment-Magnet einem Greifer zugeführt und von dem Greifer gehalten. Der von dem Greifer gehaltene Segment-Magnet wird einer Magnetisierungsvorrichtung zugeführt und dort magnetisiert. Der von dem Greifer gehaltene Segment-Magnet wird einer Klebstoffzuführvorrichtung zugeführt und dort mit Klebstoff versehen. Der von dem Greifer gehaltene Segment-Magnet wird dem Rotorpaket zugeführt und auf einen vorgebbaren Ort des Rotorpakets aufgeklebt.

Die Erfindung bringt den Vorteil mit sich, dass die Herstellung des Elektromotors automatisch ausgeführt werden kann. Insbesondere wird mit der Erfindung erreicht, dass das Befestigen der Segment-Magnete an dem Rotor oder an dem Stator automatisch erfolgt. Damit wird gewährleistet, dass die hergestellten Elektromotoren, insbesondere die Verklebungen der Segment-Magnete hinsichtlich ihrer Positionierung auf dem Rotor oder auf dem Stator eine hohe, immer gleichbleibende Genauigkeit aufweisen. Ebenfalls wird durch die Automatisierung der Herstellung ein Montagefehler, insbesondere eine fehlerhafte Magnetisierung aufeinanderfolgender Segment-Magnete, vermieden.

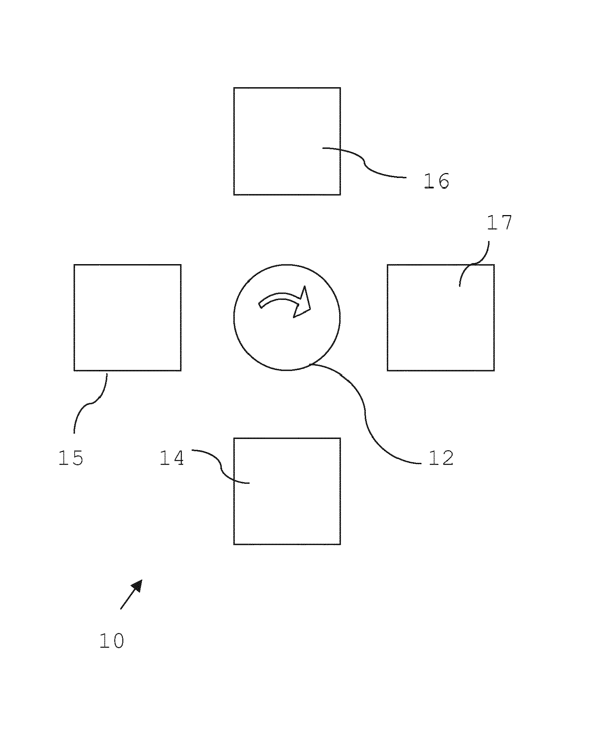

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Die einzige Figur der Zeichnung zeigt ein schematisches Blockschaltbild zur Erläuterung eines Ausführungsbeispiels eines erfindungsgemäßen Verfahrens zur Herstellung eines Elektromotors.

Das erfindungsgemäße Verfahren ist ganz allgemein bei der Herstellung von Elektromotoren anwendbar. Vorzugsweise ist das Verfahren zur Herstellung von permanentmagnetisch erregten Elektromotoren verwendbar, insbesondere von bürstenlosen, permanentmagnetisch erregten Elektromotoren.

Das nachfolgend erläuterte Ausführungsbeispiel des erfindungsgemäßen Verfahrens bezieht sich beispielhaft auf einen bürstenlosen, permanentmagnetisch erregten Elektromotor.

Es wird aber darauf hingewiesen, dass das erfindungsgemäße Verfahren auch bei Elektromotoren mit einem Kommutator zur Anwendung kommen kann. Ebenfalls wird darauf hingewiesen, dass das erfindungsgemäße Verfahren in gleicher Weise bei sogenannten Innen- oder Außenläufermotoren anwendbar ist.

Das nachfolgend beschriebene Ausführungsbeispiel des erfindungsgemäßen Verfahrens geht von einem Elektromotor aus, der einen permanentmagnetisch erregten Rotor aufweist, der innerhalb eines feststehenden, elektrisch ansteuerbaren Stators drehbar angeordnet ist. Der Rotor und der Stator können jeweils zwei oder mehrere Pole aufweisen und aus einer Mehrzahl von Blechen aufgebaut sein. Es versteht sich, dass zusätzlich zu den Blechen auch andere Bauteile vorhanden sein können. Der Rotor und der Stator weisen einander zugewandte Umfangsflächen auf, zwischen denen sich ein Luftspalt befindet.

Bei dem vorliegenden Ausführungsbeispiel wird die dem Stator zugewandte Umfangsfläche des Rotors durch zwei oder mehrere permanent erregte Magnete gebildet, die segmentartig an vorgegebenen Orten im Verlauf des Umfangs des Rotors angeordnet sind.

Dies bedeutet beispielsweise, dass die einzelnen Segment-Magnete sich jeweils über im Wesentlichen denselben Winkel in Umfangsrichtung erstrecken. Weiterhin weisen die Segment-Magnete im Wesentlichen dieselbe geometrische Form auf, bei der es sich beispielsweise um einen an sich rechteckförmigen Quader handelt, der jedoch entsprechend der genannten Umfangsfläche des Rotors gekrümmt ist. Die aufeinanderfolgenden Segment-Magnete weisen in Umfangsrichtung des Rotors immer einander entgegengesetzte Polungen auf und die Anzahl der Segment-Magnete in Umfangsrichtung des Rotors ist geradzahlig.

In der Figur ist eine Montagevorrichtung 10 zur Herstellung des vorgenannten Rotors dargestellt, die im Wesentlichen einen sogenannten Rundtaktteller 12 und vier Montagestationen 14, 15, 16, 17 aufweist.

Bei dem Rundtaktteller 12 handelt es sich um eine scheibenförmige Montage-Einheit, die im vorliegenden Ausführungsbeispiel um eine etwa horizontale Achse drehbar ist. Der Rundtaktteller 12 weist vier gleichartige Greifer auf, die in nicht-dargestellter Weise im Abstand von 90 Grad in Umfangsrichtung etwa am Außenrand der scheibenförmigen Montage-Einheit angeordnet sind. Der Rundtaktteller 12 ist derart ansteuerbar, dass er immer um 90 Grad in Drehrichtung vorwärts bewegt wird.

Jeder der Greifer ist derart ausgebildet, dass von ihm ein einzelner Segment-Magnet festgehalten und wieder losgelassen werden kann. Die Art und Weise dieser vorübergehenden Halterung von Segment-Magneten kann auf unterschiedliche Weisen erfolgen. Beispielsweise kann es sich um eine federbelastete Rast-Halterung oder dergleichen handeln.

Die vier Montagestationen 14, 15, 16, 17 sind derart in Umfangsrichtung um den Rundtaktteller 12 herum angeordnet, dass immer eine der Montagestationen 14, 15, 16, 17 jeweils einem der Greifer des Rundtakttellers 12 zugeordnet ist bzw. gegenübersteht. Im Wesentlichen sind die Montagestationen 14, 15, 16, 17 zu diesem Zweck im Abstand von 90 Grad in Umfangsrichtung des Rundtakttellers 12 um diesen herum angeordnet.

Der ersten Montagestation 14 werden nicht-magnetisierte Segment-Magnete mit Hilfe einer nicht-dargestellten automatisierten Zuführeinrichtung zugeführt. Gegebenenfalls werden die Segment-Magnete innerhalb der Montagestation 14 vereinzelt. Die Montagestation 14 ist derart ausgebildet, dass immer einer der nicht-magnetisierten Segment-Magnete von der Montagestation 14 an denjenigen Greifer des Rundtakttellers 12 übergeben wird, der der Montagestation 14 aktuell gegenübersteht. Von diesem Greifer des Rundtakttellers 12 wird der Segment-Magnet dann festgehalten. Dies kann form- oder kraftschlüssig erfolgen.

Die zweite Montagestation 15 weist eine nicht-dargestellte Magnetisierungsvorrichtung, insbesondere eine Magnetisierungsspule auf, die dazu ausgebildet und vorgesehen ist, die nicht-magnetisierten Segment-Magnete zu magnetisieren. Hierzu ist die Magnetisierungsvorrichtung derart angeordnet, dass ein aktuell der Montagestation gegenüberstehender Greifer des Rundtakttellers 12 mit einem daran festgehaltenen Segment-Magneten in den Magnetisierungsbereich der Magnetisierungsvorrichtung eintaucht und damit magnetisiert wird.

Die Magnetisierungsvorrichtung ist dabei derart ausgebildet, dass die Polung der Magnetisierung des jeweils vorhandenen Segment-Magneten wählbar ist. Insbesondere können aufeinanderfolgend in die Montagestation 15 eingebrachte Segment-Magnete automatisch entgegengesetzt zueinander magnetisiert werden.

Die dritte Montagestation 16 ist mit einer Klebstoffzuführvorrichtung, insbesondere einer sogenannten Dispenser-Einheit versehen, die dazu ausgebildet ist, eine vorgebbare Menge eines Klebstoffs auf denjenigen Segment-Magneten aufzutragen, der aktuell der Montagestation 16 gegenübersteht. Bei diesem Segment-Magneten handelt es sich um einen magnetisierten Segment-Magneten. Der Segment-Magnet wird dabei von dem zugehörigen Greifer des Rundtakttellers 12 gehalten.

Anstelle der vorgebbaren Menge kann auch ein bestimmtes Volumen des Klebstoffs vorgegeben sein. Der Klebestoff kann von der Montagestation 16 insbesondere in der Form einer Kleberaupe aufgetragen werden. Ergänzend kann vorgesehen sein, dass die aufgetragene Form und gegebenenfalls die Menge bzw. die Masse bzw. das Volumen des Klebstoffs mit Hilfe von Messeinrichtungen überwacht wird/werden.

Es wird nunmehr davon ausgegangen, dass die Bleche bzw. die anderen Bauteile des Rotors in einem vorausgehenden Verfahrensschritt in nicht-näher dargestellter oder erläuterter Art und Weise auf einer Motorwelle montiert werden. Diese Bleche bzw. Bauteile mit der Motorwelle und gegebenenfalls mit weiteren Bauteilen des Rotors, jedoch ohne die Segment-Magnete des Rotors, bilden eine nachfolgend als Rotorpaket bezeichnete Anordnung.

Derartige Rotorpakete werden der vierten Montagestation 17 zugeführt. Dies kann manuell oder mit Hilfe einer nicht-dargestellten automatisierten Zuführeinrichtung erfolgen. Die den Rotorpaketen noch fehlenden Segment-Magnete sollen mit Hilfe der Montagestation 17 an vorgegebenen Orten auf der Umfangsfläche des jeweiligen Rotorpakets festgeklebt werden.

Die Montagestation 17 weist einen nicht-dargestellten Schlitten auf, der mit einem Greifer versehen ist. Mit Hilfe des Greifers kann eines der vorgenannten Rotorpakete festgehalten und wieder freigegeben werden. Weiterhin kann mit Hilfe des Greifers ein von dem Greifer gehaltenes Rotorpaket um seine von der Motorwelle gebildete Drehachse gedreht werden. Mit Hilfe des Schlittens kann ein von dem Greifer gehaltenes Rotorpaket in Längsrichtung seiner Drehachse verschoben werden. Die Winkelstellung des Rotorpakets in Drehrichtung sowie die Stellung des Rotorpakets in Längsrichtung können dabei mit Hilfe von Messeinrichtungen eingestellt und überwacht werden.

Die Montagestation 17 ist derart ausgebildet, dass das Rotorpaket hinsichtlich seiner Winkelstellung in Drehrichtung und seiner Stellung in Längsrichtung derart ausgerichtet und eingestellt werden kann, dass ein Segment-Magnet genau demjenigen vorgegebenen Ort des Rotorpakets gegenübersteht, an dem der Segment-Magnet auf dem Rotorpaket angeordnet werden soll. Ist dies der Fall, so kann der Schlitten der Montagestation 17 mit dem darin gehaltenen Rotorpaket derart verschoben werden, dass der gegenüberstehende Segment-Magnet mit dem darauf befindlichen Klebstoff an dem Rotorpaket zur Anlage kommt und damit dort festgeklebt wird. Ergänzend oder alternativ kann der Greifer mit dem Segment-Magneten insbesondere linear in Richtung zu dem Rotorpaket bewegt werden.

Bei dem Segment-Magneten handelt es sich dabei um einen magnetisierten Segment-Magneten, der von einem zugehörigen Greifer des Rundtakttellers 12 gehalten wird.

Weiterhin ist die Montagestation 17 derart ausgebildet, dass, sobald der Klebstoff eine ausreichend große Klebekraft erreicht hat, der Schlitten mit dem Rotorpaket und dem nunmehr festgeklebten Segment-Magneten derart verfahren wird, dass sich der Segment-Magnet von dem nunmehr geöffneten Greifer des Rundtakttellers 12 löst. Ergänzend oder alternativ kann der geöffnete Greifer insbesondere linear von dem Rotorpaket wegbewegt werden. Der magnetisierte Segment-Magnet befindet sich damit fest auf dem Rotorpaket.

Die Montagevorrichtung 10 wird mit einem Montagetakt betrieben. Dies bedeutet, dass nach jeweils einer vorgegebenen Zeitdauer der Rundtaktteller 12 um 90 Grad in Drehrichtung weitergedreht wird. Innerhalb der vorgebebenen Zeitdauern werden in jeder der Montagestationen 14, 15, 16, 17 die erläuterten Montageschritte an bzw. mit dem der jeweiligen Montagestation 14, 15, 16, 17 gegenüberstehenden Segment-Magneten ausgeführt. Innerhalb jeder der vorgegebenen Zeitdauern werden also vier unterschiedliche Segment-Magnete bearbeitet bzw. verarbeitet.

Beispielhaft wird angenommen, dass in einem ersten Montagetakt ein erster Segment-Magnet in der ersten Montagestation 14 an den gegenüberstehenden Greifer des Rundtakttellers 12 übergeben wird. In einem zweiten Montagetakt wird dieser erste Segment-Magnet in der zweiten Montagestation 15 magnetisiert. Gleichzeitig wird in dem zweiten Montagetakt ein zweiter Segment-Magnet in der ersten Montagestation 14 an den gegenüberstehenden Greifer des Rundtakttellers 12 übergeben. In einem dritten Montagetakt wird der erste Segment-Magnet in der dritten Montagestation 16 mit Klebstoff versehen. Gleichzeitig wird der zweite Segment-Magnet in der zweiten Montagestation 15 magnetisiert und ein dritter Segment-Magnet wird in der ersten Montagestation 14 an den gegenüberstehenden Greifer des Rundtakttellers 12 übergeben. In einem vierten Montagetakt wird der erste Segment-Magnet in der vierten Montagestation 17 mit dem dort vorhandenen Rotorpaket verklebt. Gleichzeitig wird der zweite Segment-Magnet in der dritten Montagestation 16 mit Klebstoff versehen, der dritte Segment-Magnet wird in der zweiten Montagestation 15 magnetisiert und ein vierter Segment-Magnet wird in der ersten Montagestation 14 an den gegenüberstehenden Greifer des Rundtakttellers 12 übergeben.

In einem fünften und in nachfolgenden Montagetakten werden die vorstehend erläuterten Montageschritte in entsprechender Weise an bzw. mit den nunmehr jeweils vorhandenen Segment-Magneten ausgeführt. Dabei werden immer neue bzw. nächste Segment-Magnete der ersten Montagestation 14 sowie neue Rotorpakete der vierten Montagestation 17 zugeführt. Weiterhin werden die fertiggestellten Rotorpakete von der vierten Montagestation 17 weggeführt. Zwischen den einzelnen Montagetakten wird der Rundtaktteller 12 mit den von den vier Greifern gehaltenen Segment-Magneten jeweils um 90 Grad weitergedreht.

Im Hinblick auf die Montagestation 17 wird die Winkelstellung des Rotorpakets in seiner Drehrichtung in jedem Montagetakt derart verändert, dass immer der fortlaufend nächste vorgegebene Ort auf dem Rotorpaket dem dann aktuell vorhandenen Segment-Magneten gegenübersteht. Dieses Weiterdrehen des Rotorpakets in seiner Drehrichtung wird so lange wiederholt, bis alle Segment-Magnet entlang dem Umfang des Rotorpakets aufgeklebt sind. Danach wird dem Schlitten der Montagestation 17 das nächste Rotorpaket zugeführt und das Verfahren wird fortgesetzt.

Handelt es sich beispielsweise um einen achtpoligen Rotor, so werden nacheinander acht gegensinnig magnetisierte Segment-Magnete auf dem Rotorpaket aufgeklebt. Jeder der Segment-Magnete erstreckt sich dabei um etwa 45 Grad in Umfangsrichtung. In entsprechender Weise wird das Rotorpaket nach jedem Montagetakt um 45 Grad gedreht. Nach acht Montagetakten wird dann das bearbeitete Rotorpaket mit den aufgeklebten Segment-Magneten der Montagestation 17 aus entnommen und das nächste Rotorpaket wird der Montagestation 17 zugeführt. Eine alternative Reihenfolge des Aufklebens der Segment-Magnete auf das Rotorpaket ist ebenfalls möglich.

Das beschriebene Verfahren zur Herstellung eines Elektromotors kann in entsprechender Weise auch dann angewendet werden, wenn die Segment-Magnete nicht dem Rotor, sondern dem Stator zugeordnet sind. In diesem Fall wird ein entsprechendes Statorpaket der Montagestation 17 zugeführt und die Segment-Magnete werden in dieses Statorpaket eingeklebt.

Weiterhin ist das beschriebene Verfahren nicht nur bei Innenläufermotoren, sondern in entsprechender Weise auch bei Außenläufermotoren anwendbar.

## Patentansprüche

1. Verfahren zur Herstellung eines Elektromotors, insbesondere eines permanent erregten Elektromotors, bei dem ein Segment-Magnet an einem Rotorpaket oder an einem Statorpaket festgeklebt wird, **dadurch gekennzeichnet, dass** der Segment-Magnet einem Greifer zugeführt und von dem Greifer gehalten wird, dass der von dem Greifer gehaltene Segment-Magnet einer Magnetisierungsvorrichtung zugeführt und dort magnetisiert wird, dass der von dem Greifer gehaltene Segment-Magnet einer Klebstoffzuführvorrichtung zugeführt und dort mit Klebstoff versehen wird, und dass der von dem Greifer gehaltene Segment-Magnet dem Rotorpaket oder dem Statorpaket zugeführt und auf einen vorgebbaren Ort des Rotorpakets oder des Statorpakets aufgeklebt wird.

2. Verfahren nach Anspruch 1, wobei der Segment-Magnet mit Hilfe einer automatisierten Zuführeinrichtung dem Greifer zugeführt und gegebenenfalls vorab vereinzelt wird.

3. Verfahren nach einem der Ansprüche 1 oder 2, wobei aufeinanderfolgende Segment-Magnete mit einer entgegengesetzten Polung magnetisiert werden.

4. Verfahren nach einem der Ansprüche 1 bis 3, wobei eine vorgegebene Menge oder eine vorgegebene Masse oder ein vorgegebenes Volumen des Klebstoffs auf den von dem Greifer gehaltenen Segment-Magneten automatisiert aufgetragen wird.

5. Verfahren nach Anspruch 4, wobei die vorgegebene Masse oder das vorgegebenes Volumen des Klebstoffs überwacht wird.

6. Verfahren nach einem der Ansprüche 1 bis 5, wobei die Winkelstellung des Rotorpakets oder des Statorpakets in Drehrichtung automatisiert eingestellt wird.

7. Verfahren nach einem der Ansprüche 1 bis 6, wobei die Stellung des Rotorpakets oder des Statorpakets in Längsrichtung automatisiert eingestellt wird.

8. Verfahren nach einem der Ansprüche 6 oder 7, wobei der von dem Greifer gehaltene Segment-Magnet in Längsrichtung zu dem Rotorpaket oder dem Statorpaket verschoben wird und/oder wobei das Rotorpaket oder das Statorpaket in Längsrichtung zu dem von dem Greifer gehaltenen Segment-Magneten verschoben wird.

9. Verfahren nach einem der Ansprüche 1 bis 8, wobei die einzelnen Verfahrensschritte nach einer vorgegebenen Zeitdauer mit einem nächsten Segment-Magneten wiederholt werden.

10. Montagevorrichtung (10) zur Herstellung eines Elektromotors, insbesondere eines permanent erregten Elektromotors, mit einem Rundtaktteller (12), der mit vier Greifern versehen ist, und mit vier Montagestationen (14, 15, 16, 17), die den Greifern des Rundtakttellers (12) zugeordnet sind, wobei in der ersten Montagestation (14) ein Segment-Magnet einem der Greifer zuführbar ist, wobei die zweite Montagestation (15) eine Magnetisierungsvorrichtung aufweist, mit der ein Segment-Magnet magnetisierbar ist, wobei die dritte Montagestation (16) eine Klebstoffzuführvorrichtung aufweist, mit der Klebstoff auf einen Segment-Magneten aufbringbar ist, und wobei die vierte Montagestation (17) einen Schlitten aufweist, in dem ein Rotorpaket oder ein Statorpaket aufnehmbar ist, und mit dem ein vorgegebener Ort des Rotorpakets oder das Statorpakets auf einen Segment-Magneten ausrichtbar ist.

11. Montagevorrichtung (10) nach Anspruch 10, wobei der Schlitten mit einem Greifer für das Rotorpaket oder das Statorpaket versehen ist, und wobei der Schlitten und/oder der Greifer derart ausgebildet ist/sind, dass das Rotorpaket oder das Statorpaket in Drehrichtung und/oder in Längsrichtung einstellbar ist.

12. Montagevorrichtung (10) nach Anspruch 10 oder 11, wobei die vier Greifer des Rundtakttellers (12) nacheinander den vier Montagestationen (14, 15, 16, 17) gegenüberstehen.
